# EUROPÄISCHE PATENTSCHRIFT

(11) **EP 1 639 926 B1**
(45) Veröffentlichungstag und Bekanntmachung des Hinweises auf die Patenterteilung: **21.01.2009**
(21) Anmeldenummer: 05405399.6
(22) Anmeldetag: 23.06.2005
(51) Int. Cl.: A47J 31/44

(54) **Kaffeemaschine mit einer höhenverstellbaren Auffangschale**
Coffee apparatus with a height-adjustable collecting bowl
Machine à café avec un récipient qui est réglable en hauteur

(30) Priorität: 24.09.2004 CH 15652004
(43) Veröffentlichungstag der Anmeldung: 29.03.2006
(73) Patentinhaber: Saeco IPR Limited, Dublin 12 (IE)
(72) Erfinder: Turi, Mariano, 8046 Zürich (CH)
(74) Vertreter: Rottmann, Maximilian

(56) Entgegenhaltungen:
- CH-A- 315 837
- DE-A1- 3 241 606
- DE-A1- 10 239 594

## Beschreibung

Die Erfindung betrifft eine Kaffeemaschine nach dem Oberbegriff des Anspruchs 1.

Bei Kaffeemaschinen, insbesondere Espresso-Kaffeemaschinen, ist es wünschenswert, die zur Aufnahme der Kaffeetassen vorgesehene Abstellplatte höhenverstellbar zu gestalten, damit unterschiedlich grosse bzw. hohe Kaffeetassen in optimalem Abstand unterhalb des Getränkeauslasses platziert werden können.

Aus der EP-B-1 278 444 A1 ist eine gattungsgemässe Brühgetränkemaschine bekannt. Diese weist einen Sockel auf, der eine Auffangwanne aufnimmt. Die Auffangwanne ist mit einem Deckel versehen, der einen Träger für das Brühgetränkegefäss bildet. Im weiteren verfügt die Maschine über einen Ständer, der mit dem Sockel fest verbunden ist und an dessen Kopf der Brühgetränkeauslauf angeordnet ist. Der Deckel der Auffangwanne ist mit einer Schürze versehen, deren Innenwand drei vertikal übereinander angeordnete Gleitschienen aufweist. Die Wanne ihrerseits ist auf beiden Seiten mit je einer Rippe versehen, welche dazu bestimmt sind, im Eingriff mit einer Gleitschiene zu stehen. Der Deckel dieser Brühgetränkemaschine kann in drei Stufen in der Höhe verstellt werden.

Aus der EP-A-0 585 607 ist eine Espressomaschine bekannt, die mit einer höhenverstellbaren Abstellplatte versehen ist. Die Abstellplatte ist über eine Auffangschale an dem Gerätefuss abgestützt. Die Höhenverstellung basiert auf dem Prinzip eines Schraubentriebs, der entweder zwischen dem Gerätefuss und der Auffangschale oder zwischen der Auffangschale und der Abstellplatte wirkt. Durch Verdrehen der Auffangschale wird die Höhe der Abstellplatte verändert.

Im weiteren ist aus der DE-A-32 41 606 eine elektrische Kaffeemaschine bekannt, die einen unterhalb des Kaffeeauslasses angeordneten Ausleger aufweist, auf dem eine Tropfschale angeordnet ist. Die Tropfschale ist mit einer Abdeckplatte verschlossen, die mit Durchgangsöffnungen versehen ist und als Stellfläche für zwei Kaffeetassen dient.

Ein Nachteil der den vorgängig genannten Kaffeemaschinen anhaftet ist darin zu sehen, dass die Auffangwanne bzw. die Abstellplatte entweder gar nicht oder nur innerhalb eines beschränkten Bereichs in der Höhe verstellt werden kann.

Schliesslich ist aus der CH 315 837 eine elektrische Express-Kaffeemaschine bekannt, die mit einem Dampfkessel versehen ist, der von einem Ständer umschlossen ist. Zur Aufnahme von Tassen und Gläsern ist eine höhenverstellbare Platte vorgesehen, die vertikal unterhalb eines Anbrühbehälters angeordnet ist. Die Platte ist mit einem Gleitschuh versehen, der in einem vertikalen Schlitz des Ständers geführt ist. Seitlich dieses Schlitzes sind Rasten angeordnet, an denen ein mit Nocken versehenes Arretierungsorgan einrastbar ist. Dieses Arretierungsorgan ist durch eine an der Unterseite der Platte angeordnete Stange mit einem federbelasteten Drücker verbunden. Durch Betätigen dieses Drückers wird das Arretierungsorgan ausgerückt, so dass die Platte in der Höhe verstellt werden kann. Bei dieser Auslegung besteht die Gefahr, dass die höhenverstellbare Platte relativ labil ist, da sie nur zentral geführt wird. Ausserdem dürfte sie relativ empfindlich auf nicht zentrische Belastungen reagieren.

Die Erfindung zielt darauf ab, eine mit einer Abstellplatte versehene Kaffeemaschine derart weiterzubilden, dass die Abstellplatte in einem weiten Bereich einfach und schnell in der Höhe verstellt werden kann, wobei ein Verkanten der Abstellplatte bzw. des Verstellmechanismus beim vertikalen Verschieben möglichst vermieden werden soll und wobei die Abstellplatte in der jeweiligen Position stabil fixierbar sein soll.

Hierzu wird nach der Erfindung eine Kaffeemaschine bereitgestellt, welche mit einer der als Alternativen im Kennzeichen des Anspruchs 1 angeführten Merkmalskombination versehen ist.

Indem die Höhenverstellvorrichtung entweder eine vertikal verlaufende Zahnschiene mit auf beiden Seiten davon angeordneten Führungsschienen zum Führen des Supports umfasst oder die Höhenverstellvorrichtung zwei Zahnschienen und eine dazwischen angeordnete Führungsschiene aufweist und am Support ein durch die Führungsschiene geführtes Organ und eine Welle abgestützt sind, die auf beiden Seiten mit je einem in eine Zahnschiene eingreifenden Zahnrad versehen ist, wird die grundsätzliche Voraussetzung geschaffen, dass die Abstellplatte in der jeweiligen Position stabil fixierbar ist, einfach und schnell in der Höhe verstellt werden kann und derart geführt wird, dass sie beim vertikalen Verschieben nicht verkantet.

Bevorzugte Weiterbildungen der Kaffeemaschine sind in den abhängigen Ansprüchen 2 bis 16 definiert.

Die Erfindung wird nachfolgend anhand von Zeichnungen näher erläutert. Dabei zeigt:
- Fig. 1: eine Seitenansicht der Kaffeemaschine;
- Fig. 2: einige Elemente der Kaffeemaschine in einer Explosionsdarstellung;
- Fig. 3: die Elemente der Fig. 2 in einer weiteren Explosionsdarstellung;
- Fig. 4: einen Längsschnitt durch Teile der Kaffeemaschine;
- Fig. 4a: einen vergrösserten Ausschnitt aus der Fig. 4;
- Fig. 5: einen Querschnitt durch die Teile der Fig. 4;
- Fig. 6: ein alternatives Ausführungsbeispiel eines Führungsmechanismus in einer perspektivischen Ansicht von vorne,
- Fig. 7: das Ausführungsbeispiel gemäss Fig. 6 in einem teilweisen Querschnitt, und
- Fig. 8: das Ausführungsbeispiel gemäss Fig. 6 in einem Längsschnitt.

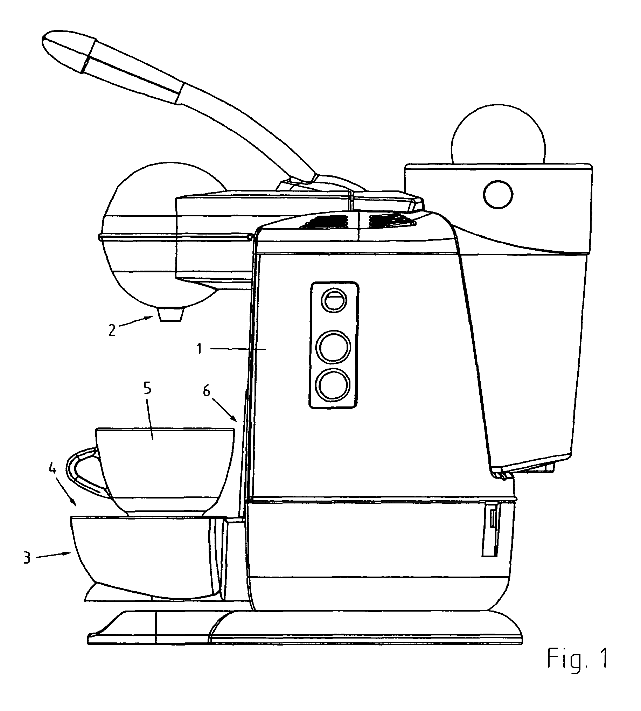

Die Fig. 1 zeigt eine halbautomatische Kaffeemaschine in einer Seitenansicht. Da gattungsgemässe Kaffeemaschinen bekannt sind, wird nachfolgend nur auf einige, im Zusammenhang mit der Erfindung relevante Merkmale eingegangen. Das Gehäuse der Kaffeemaschine ist generell mit dem Bezugszeichen 1 versehen. Die Kaffeemaschine ist mit einem Brühgetränkeauslass 2 versehen, der oberhalb einer Auffangschale 3 angeordnet ist. Die Auffangschale 3 dient der Aufnahme von Flüssigkeit, insbesondere von Restwasser, welches beispielsweise nach der Zubereitung eines Kaffeegetränks aus dem Brühgetränkeauslass 2 tropft. Die Auffangschale 3 ist auf der Oberseite mit einem Gitterrost 4 versehen, auf welchem eine oder zwei Kaffeetasse(n) 5 platziert werden kann/können. Die Auffangschale 3 ist mittels einer Verstellvorrichtung 6 höhenverstellbar am Gehäuse der Kaffeemaschine 1 abgestützt.

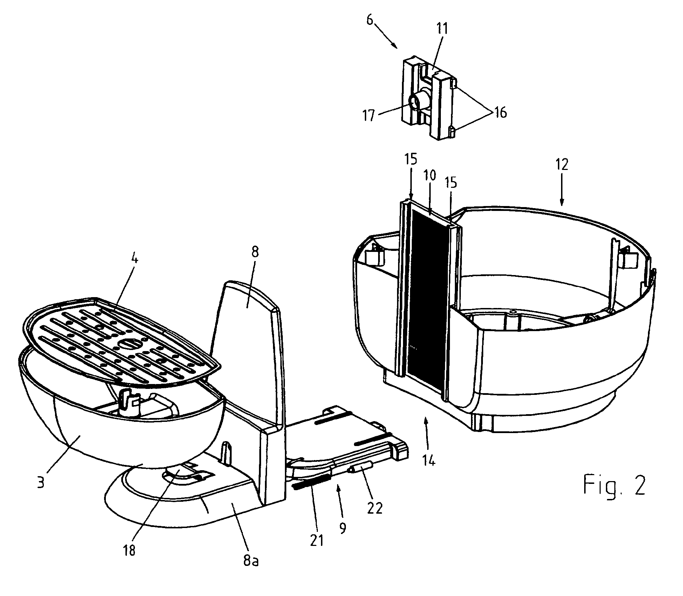

Aus der Fig. 2 sind einige Elemente der Kaffeemaschine und insbesondere der Verstellvorrichtung 6 von oben in einer Explosionsdarstellung ersichtlich. Namentlich sind dies die Auffangschale 3, der Gitterrost 4, ein L-förmiger Support 8, ein Schieber 9 eine Zahnschiene 10, die an einem Unterteil 12 des Kaffeemaschinengehäuses angeordnet ist sowie ein Schlitten 11. Der Mittelteil 14 der Zahnschiene 10 ist mit einer Vielzahl von zahnartigen Erhebungen versehen, während auf beiden Seiten der Zahnschiene 10 je eine Führungsschiene 15 in Form einer schwalbenschanzförmigen Nut vorgesehen ist. Der Schlitten 11 ist mit zu den Führungsschienen 15 korrespondierenden Führungsnocken 16 versehen. Im weiteren weist der Schlitten einen zylindrischen Fortsatz 17 auf, an welchem der Support 8 mittels einer nicht näher dargestellten Schraube befestigt wird. Die Zahnschiene 10 bildet zusammen mit den beiden Führungsschienen 15 und dem Schlitten 11 den eigentlichen Führungsmechanismus 6.

Der Schieber 9 dient dem Arretieren des Supports 8 in vertikaler Richtung an der Zahnschiene 10, wie nachfolgend noch näher erläutert wird. Im weiteren ist eine Druckfeder 21 ersichtlich, welche an einer am Support 8 angeordneten, scharnierartigen Abstützung 22 anzugreifen bestimmt ist und den Schieber 9 in Richtung der Zahnschiene 10 belastet, wobei insgesamt zwei solcher Druckfedern 21 vorgesehen sind. Der Basisteil des Supports 8 bildet einen Supportfuss 8a, auf dessen Oberseite ein Rastelement 18 angeordnet ist, welches dem Fixieren der Auffangschale 3 dient.

Die gezeigte Ausbildung der Höhenverstelleinrichtung, welche mit einer zentralen Zahnschiene 10 und beidseitig davon angeordneten Führungsschienen 15 versehen ist, ermöglicht, dass der Support 8 einfach und schnell in der in der Höhe verstellt werden kann, ohne dass er bzw. der Schlitten 11 beim vertikalen Verschieben verkantet. Durch das Vorsehen von zwei Führungsschienen 15 wird zudem sichergestellt, dass der Support 8 stabil an Kaffeemaschine abgestützt ist und relativ unempfindlich ist in Bezug auf nicht zentrische Belastungen.

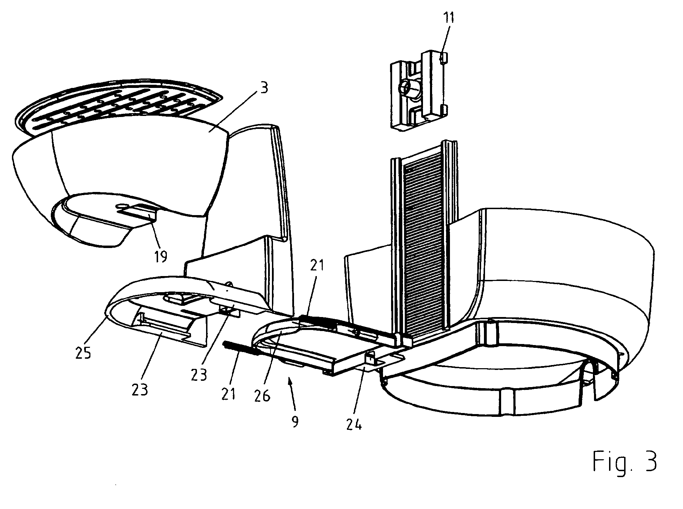

In der Fig. 3 sind die Elemente der Fig. 2 in einer Ansicht von unten ersichtlich. Aus dieser Darstellung sind insbesondere eine auf der Unterseite der Auffangschale 3 angeordnete Ausnehmung 19, zwei auf der Unterseite des Supports 8 angeordnete Gleitschienen 23, ein am Schieber 9 angeordneter Fortsatz 24 sowie die beiden Druckfedern 21 ersichtlich. Im weiteren ist ersichtlich, dass sowohl der Supportfuss 8a wie auch der Schieber 9 auf der Vorderseite mit je einer als Griffmulde dienenden Schürze 25, 26 versehen sind. Während die Gleitschienen 23 der Führung und Abstützung des Schiebers 9 dienen, wird letzterer durch die beiden Federn 21 in Richtung der Zahnschiene 10 belastet. Der am Schieber 9 angeordnete Fortsatz 24 korrespondiert in der Form mit den zahnartigen Erhebungen der Zahnschiene 10 und dient dem Fixieren des Schlittens 11 zusammen mit dem Support 8 und der Aufnahmeschale 3 in vertikaler Richtung. Die Schürze 26 dient dem manuellen Erfassen des Schiebers 9, so dass ein Benutzer daran angreifen und den Schieber 9 entgegen der Federkraft nach vorne ziehen kann. Mittels der Ausnehmung 19 an der Unterseite der Auffangschale 3 kann letztere im Sinne eines Schnappverschlusses an dem auf der Oberseite des Supportfusses 8a angeordneten Rastelement 18 (Fig. 2) lösbar fixiert werden.

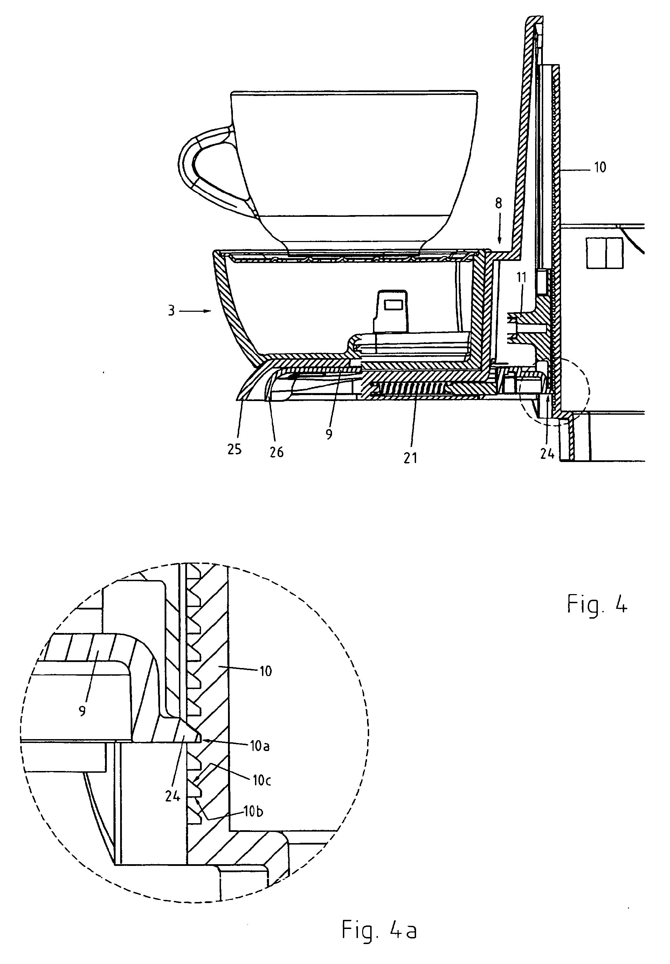

Die Fig. 4 zeigt die Elemente der Figuren 2 und 3 in einem Längsschnitt. Um die Auffangschale 3 in der Höhe zu verstellen, wird der Schieber 9 an der Schürze 26 entgegen der Kraft der Druckfedern 21 manuell nach vorne gezogen. Dadurch wird der Fortsatz 24 aus der jeweiligen Ausnehmung der Zahnschiene 10 herausgezogen, so dass der Schlitten 11 zusammen mit der daran fixierten Auffangschale 3 nach unten oder oben verschoben werden kann.

Die Fig. 4a zeigt einen vergrösserten Ausschnitt aus der Fig. 4. Aus dieser Darstellung ist insbesondere ersichtlich, wie der Fortsatz 24 des mittels Federn belasteten Schiebers 9 formschlüssig in eine Ausnehmung 10a in der Zahnschiene 10 eingreift. Um unter Belastung ein ungewolltes Herausdrücken des Fortsatzes 24 aus der jeweiligen Ausnehmung 10a zu verhindern, verläuft der Bodenbereich 10b der jeweiligen Ausnehmung 10a im wesentlichen horizontal, während der obere Bereich 10c der Ausnehmung 10a jeweils konisch ausgebildet ist.

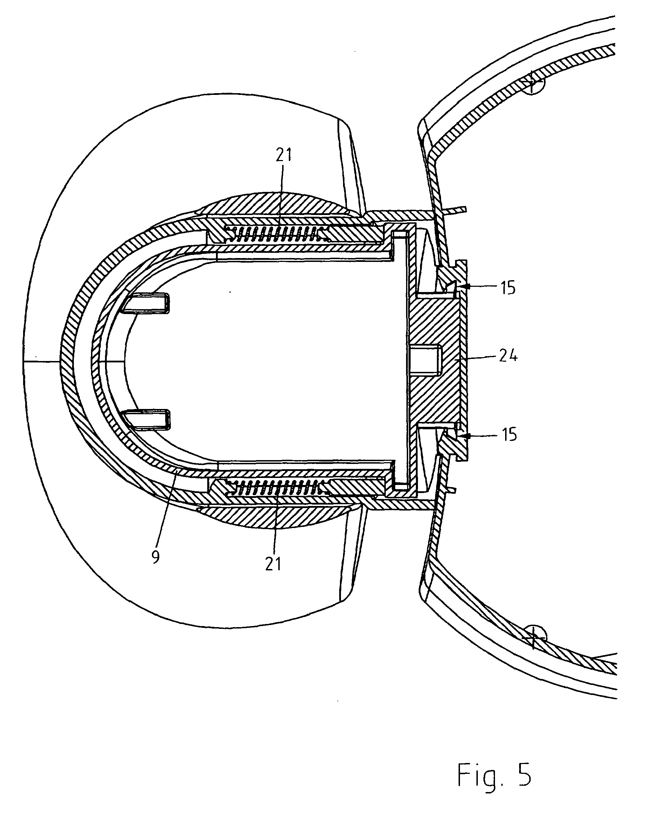

Fig. 5 zeigt einen Querschnitt durch die Elemente der Fig. 4. Insbesondere sind daraus der mittels den beiden Federn 21 belastete Schieber 9 mitsamt dem Fortsatz 24 sowie die beiden schwalbenschanzförmigen Führungsschienen 15 ersichtlich.

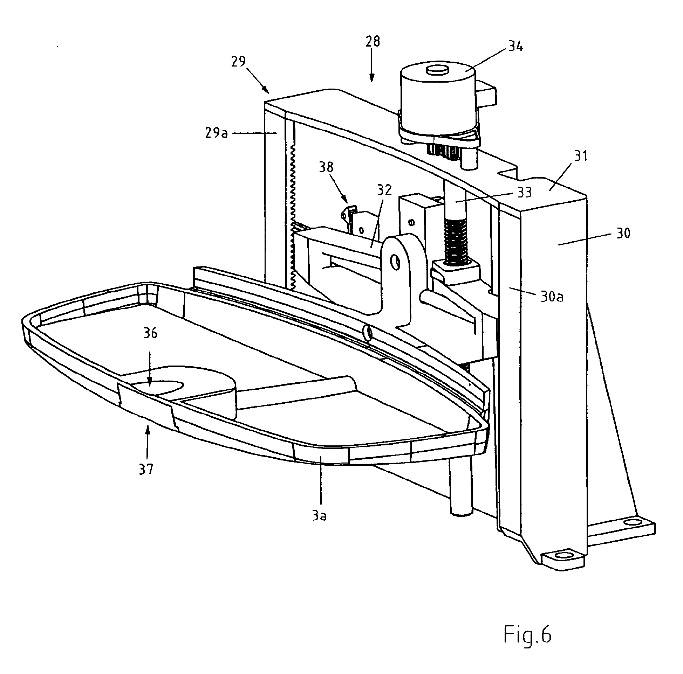

Die Fig. 6 zeigt ein alternatives Ausführungsbeispiel einer Verstellvorrichtung 27 in einer perspektivischen Ansicht von vorne. Die Verstellvorrichtung weist einen sich vertikal erstreckenden Tragkörper 28 auf, der einen im wesentlichen rechteckigen Querschnitt besitzt und auf der Auffangschale 3a zugewandten Vorderseite geöffnet ist, so dass zwei im wesentlichen L-förmig ausgebildete Seitenwände 29, 30 gebildet werden. Auf der Oberseite ist der Tragkörper 28 mit einer Abdeckung 31 versehen. Der Basisteil der jeweiligen Seitenwand 29, 30 ist auf der Innenseite mit einer Zahnschiene versehen, wie anschliessend noch erläutert wird. Zur Führung und Abstützung der Auffangschale 3a ist wiederum ein Support 32 vorgesehen. Im weiteren ist eine von einem Elektromotor 34 angetriebene Gewindespindel 33 ersichtlich, die der Höhenverstellung des Supports 32 und der damit verbundenen Auffangschale 3a dient. Die Auffangschale 3a ist im Bereich der Vorderseite sowohl auf der Ober- wie auch auf der Unterseite mit je einem Sensor 36, 37 versehen, der auf Berührung reagiert und mit der Elektronik der Kaffeemaschine verbunden ist. Über diese Elektronik wird der Elektromotor 34 und damit die Gewindespindel 33 derart angesteuert, dass bei Berührung des oberen Sensors 36 die Auffangschale 3a hinunter fährt, während eine Berührung des unteren Sensors 37 die Auffangschale 3a hochfahren lässt. Im weiteren ist ein oberer Endschalter 38 ersichtlich, der die Hochfahrbewegung des Supports 32 stoppt, sobald ein am Support 32 angeordneter Hebel den Endschalter 38 betätigt. Ebenso ist ein unterer Endschalter (nicht dargestellt) vorgesehen, der die nach unten gerichtete Bewegung des Supports 32 limitiert. Die Gewindespindel 33 ist mit einem selbsthemmenden Gewinde versehen, so dass der Support 32 bei inaktiver Gewindespindel 33 durch letztere in vertikaler Richtung fixiert ist.

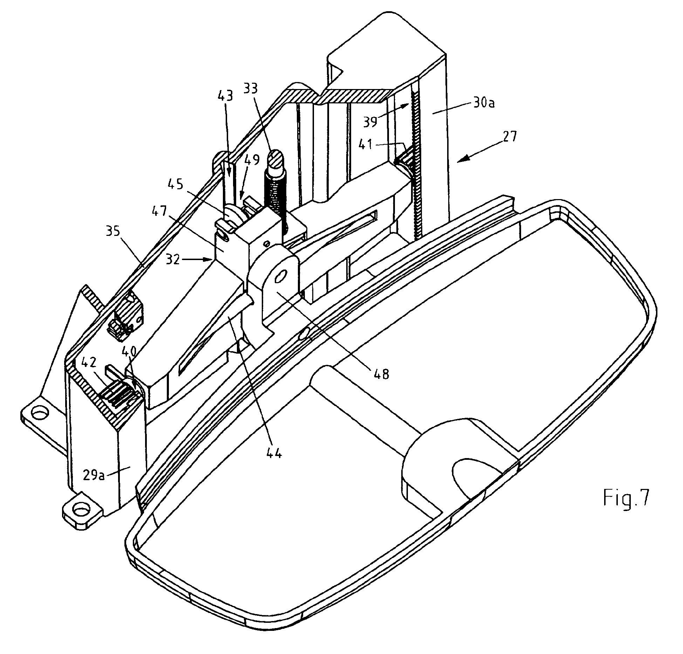

Die Fig. 7 zeigt das Ausführungsbeispiel gemäss Fig. 6 in einem teilweisen Querschnitt. Aus dieser Darstellung sind nebst den bereits vorgängig angeführten Elementen die beiden Zahnschienen 39, 40, zwei über eine Welle 44 kraftschlüssig miteinander verbundene Zahnräder 41, 42, eine in die Rückwand 35 eingelassene Führungsnut 43 sowie ein Führungsorgan 49 ersichtlich. Die beiden Zahnschienen 39, 40 sind auf der Innenseite in den Basisteil 29a, 30a der jeweiligen Seitenwand 29, 30 eingelassen. Die beiden Zahnräder 41, 42, greifen dabei formschlüssig in die jeweilige Zahnschiene 39, 40 ein. Das Führungsorgan 49 stellt einen Teil des Supports 32 dar und besteht aus einer U-förmigen Halterung 47, an welcher zwei in der Nut 43 geführte Führungsrollen 45 drehbar gelagert sind. Von den beiden genannten Führungsrollen ist aus dieser Darstellung jedoch nur die obere Führungsrolle 45 ersichtlich. Diese beiden Führungsrollen dienen zum einen der seitlichen Führung des Supports 32 beim Hoch- und Runterfahren. Zum anderen stellen sie sicher, dass der Support 32 nicht nach hinten in Richtung der Rückwand 35 ausweichen kann, so dass die beiden Zahnräder 41, 42 zwingend in die jeweilige Zahnschiene 39, 40 eingreifen. Die Auffangschale 3a ihrerseits ist über einen Tragarm 48 mit dem Support 32 verbunden. Auch bei diesem Ausführungsbeispiel wird durch die Führungsnut 43 mit den darin geführten Rollen 45, 46 sowie die beiden Zahnschienen 39, 40 und die beiden formschlüssig in die jeweilige Zahnschiene 39, 40 eingreifenden Zahnräder 41, 42, welche über eine Welle 44 kraftschlüssig miteinander verbunden sind, sichergestellt, dass der Support 32 einfach und schnell in der in der Höhe verstellt werden kann, ohne dass er beim vertikalen Verschieben verkantet und dass der Support stabil an Kaffeemaschine abgestützt und relativ unempfindlich ist in Bezug auf nicht zentrische Belastungen.

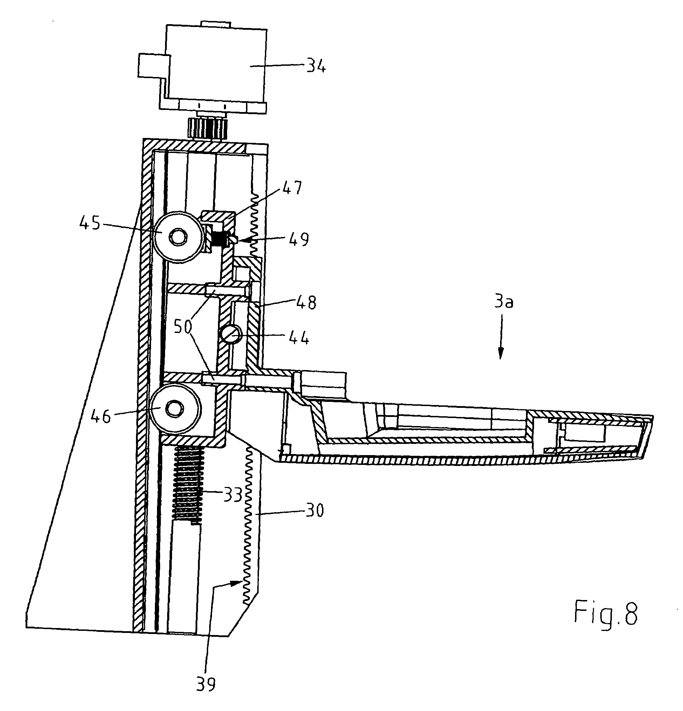

Fig. 8 zeigt einen Längsschnitt durch das Ausführungsbeispiel gemäss Fig. 6. Aus dieser Darstellung sind insbesondere die Auffangschale 3a, die Gewindespindel 33, der Elektromotor 34, die eine, in die Seitenwand 30 eingelassene Zahnschiene 39, die die beiden Zahnräder kraftschlüssig verbindende Welle 44, das Führungsorgan 49 mit der Halterung 47 und den beiden daran angeordneten Führungsrollen 45, 46 sowie der Tragarm 48 ersichtlich. Im weiteren ist ersichtlich, dass die obere Führungsrolle 45 über eine Druckfeder 50 an der Halterung 47 abgestützt ist. Durch dieses federnde Abstützen der oberen Führungsrolle 45 wird sichergestellt, dass die Auffangschale 3 spielfrei abgestützt ist und beide Führungsrollen 45, 46 in ständigem Kontakt stehen mit der Führungsnut. Im weiteren sind zwei Befestigungsbohrungen 51 ersichtlich, welche der Aufnahme von Befestigungsmitteln -Schrauben- dienen, mittels welchen der Tragarm 48 an der Halterung 47 fixiert wird.

Die Vorteile dieses Höhenverstellmechanismus bestehen u.a. darin, dass die Auffangschale 3a über einen weiten Bereich stufenlos in der Höhe verstellt werden kann. Dabei stellen die beiden über die Welle 44 kraftschlüssig miteinander verbundenen Zahnräder 41, 42 sicher, dass die Auffangschale 3a stabil am Tragkörper 28 abgestützt wird und sich auch unter Belastung nur unwesentlich bewegt und verwindet. Die Stabilität des Ganzen wird dadurch begünstigt, dass der Support 32 in Form eines Auslegers ausgebildet ist, der auf beiden Seiten mit je einem in eine Zahnschiene 39, 40 eingreifenden Zahnrad 41, 42 versehen ist, wobei die Führungsrollen 45, 46 zentral am Support 32 abgestützt sind.

Das anhand der Fig. 6 bis 8 beschriebene Ausführungsbeispiel eignet sich insbesondere für den Einsatz in vollautomatischen Espressokaffeemaschinen, wobei auch die Höhenverstellung der Auffangschale halb- oder vollautomatisch erfolgen kann. So könnte beispielsweise ein Sensor vorgesehen werden, welcher die Höhe des auf der Auffangschale platzierten Gefässes erkennt und die Auffangschale automatisch in die passende Position verfährt. Um dies bewerkstelligen zu können, müsste die Auffangschale nach jedem Aufbrühvorgang in die unterste Position verfahren werden. Aber auch andere Varianten sind denkbar, indem beispielsweise die Auffangschale in Abhängigkeit des herzustellenden Kaffeegetränks -Espresso, Cappuccino, Milchkaffee etc.- in eine vorbestimmbare Position verfährt.

Alternativ zu dem in den Fig. 6 bis 8 gezeigten elektromotorischen Antrieb bestehend aus Antriebsspindel und Elektromotor könnte auch eine manuelle Verstellmöglichkeit des Supports vorgesehen werden. Zweckmässigerweise würde dazu die Welle 44 zusätzlich mit einem zentralen Zahnrad versehen, welches mittels eines Feststellmechanismus arretierbar wäre. Ein solcher Feststellmechanismus kann beispielsweise aus einem federbelasteten, um eine Achse schwenkbaren Hebel bestehen, der endseitig mit einer Verzahnung versehen ist, die zum Feststellen des Zahnrads in dieses eingreift. Zum Lösen des Hebels könnte dieser manuell entgegen der Kraft der Feder verschwenkt werden, so dass der Support zusammen mit der Auffangschale in der Höhe verstellt werden kann. Nach dem Loslassen des Hebels würde das Zahnrad wieder blockiert, womit der Support zusammen mit der Auffangschale in vertikaler Richtung wieder fixiert wäre.

### Bezugszeichenliste

- 1.: Gehäuse
- 2.: Getränkeauslass
- 3.: Auffangschale
- 4.: Gitterrost
- 5.: Kaffeetasse
- 6.: Verstellvorrichtung
- 7.:
- 8.: Support
- 9.: Schieber
- 10.: Zahnschiene
- 11.: Schlitten
- 12.: Unterteil
- 13.:
- 14.: Mittelteil
- 15.: Führungsschiene
- 16.: Führungsnocken
- 17.: Fortsatz
- 18.: Rastelement
- 19.: Ausnehmung
- 20.:
- 21.: Druckfeder
- 22.: Abstützung
- 23.: Gleitschiene
- 24.: Fortsatz
- 25.: Schürze
- 26.: Schürze
- 27.: Verstellvorrichtung
- 28.: Tragkörper
- 29.: Seitenwand
- 30.: Seitenwand
- 31.: obere Abdeckung
- 32.: Support
- 33.: Gewindespindel
- 34.: Elektromotor
- 35.: Rückwand
- 36.: Sensor
- 37.: Sensor
- 38.: Endschalter
- 39.: Zahnschiene
- 40.: Zahnschiene
- 41.: Zahnrad
- 42.: Zahnrad
- 43.: Führungsnut
- 44.: Welle
- 45.: Führungsrolle
- 46.: Führungsrolle
- 47.: Halterung
- 48.: Tragarm
- 49.: Führungsorgan
- 50.: Druckfeder
- 51.: Befestigungsbohrung
- 52.:
- 53.:
- 54.:
- 55.:
- 56.:
- 57.:
- 58.:
- 59.:
- 60.:
- 61.:
- 62.:
- 63.:
- 64.:
- 65.:
- 66.:
- 67.:
- 68.:
- 69.:
- 70.:

## Patentansprüche

1. Kaffeemaschine mit einem Gehäuse (1), einem Getränkeauslass (2) und einer darunter angeordneten Auffangschale (3, 3a), welche mittels einer Verstellvorrichtung (6, 27) höhenverstellbar ist und mit einer Abdeckplatte zum Abstützen von zumindest einer Kaffeetasse versehen ist, wobei die Auffangschale (3, 3a) an einem Support (8, 32) abgestützt ist, **dadurch gekennzeichnet, dass** die Verstellvorrichtung (6) entweder
- eine vertikal verlaufende Zahnschiene (10) umfasst, wobei auf beiden Seiten der Zahnschiene (10) je eine Führungsschiene (15) zum Führen des Supports (8) oder eines mit dem Support (8) verbundenen Schlittens (11) angeordnet ist und wobei der Support (8) mit zumindest einem an der Zahnschiene (10) angreifenden Element (17) versehen ist, welches zur Fixierung des Supports (8) in vertikaler Richtung ausgebildet ist, oder dass
- die Verstellvorrichtung (27) mit zwei Zahnschienen (39, 40) und einer dazwischen angeordneten Führungsschiene (43) versehen ist, wobei am Support (32) ein durch die Führungsschiene (43) geführtes Führungsorgan (49) und eine Welle (44) abgestützt sind, welch letztere auf beiden Seiten mit je einem in eine Zahnschiene (39, 40) eingreifenden Zahnrad (41, 42) versehen ist.

2. Kaffeemaschine nach Anspruch 1, **dadurch gekennzeichnet, dass** die Verstellvorrichtung (6) einen in Richtung der Zahnschiene (10) federbelasteten Schieber (9) umfasst, welcher manuell entgegen der Federkraft verschiebbar ist und mittels welchem der Support (8) in unterschiedlichen Positionen in vertikaler Richtung an der Zahnschiene (10) fixierbar ist.

3. Kaffeemaschine nach Anspruch 1 oder 2, **dadurch gekennzeichnet, dass** die Zahnschiene (10) zentral am Gehäuse und mittig zwischen den beiden Führungsschienen (15) angeordnet ist.

4. Kaffeemaschine nach Anspruch 3, **dadurch gekennzeichnet, dass** die Führungsschienen (15) in Form von schwalbenschanzförmigen Ausnehmungen ausgebildet sind und die Verstellvorrichtung (6) einen entlang der Führungsschienen (15) verschiebbaren Schlitten (11) umfasst, welcher beidseitig mit zu den Führungsschienen (15) korrespondierenden und in diese eingreifenden Führungsnocken (16) versehen ist, und wobei der Support (8) an dem Schlitten (11) fixiert ist.

5. Kaffeemaschine nach einem der vorhergehenden Ansprüche, **dadurch gekennzeichnet, dass** der Support (8) in wesentlichen L-förmig ausgebildet ist und auf der Oberseite des Basisteils (8a) ein Rastelement (18) angeordnet ist, an welchem die Auffangschale (3) mit einer korrespondierenden Ausnehmung (19) oder Erhebung lösbar fixierbar ist.

6. Kaffeemaschine nach Anspruch 1, **dadurch gekennzeichnet, dass** die Verstellvorrichtung (27) einen sich in vertikaler Richtung erstreckenden Tragkörper (28) umfasst, an dem die beiden Zahnschienen (39, 40) angeordnet sind, und dass die beiden Zahnräder (41, 42) über die Welle (44) kraftschlüssig miteinander verbunden sind und wobei Mittel (33, 34) zum Blockieren der Welle und/oder zum vertikalen Verfahren des Supports (32) vorgesehen sind.

7. Kaffeemaschine nach Anspruch 6, **dadurch gekennzeichnet, dass** die Kaffeemaschine eine mittels eines Elektromotors (34) angetriebene Gewindespindel (33) aufweist, welche mit dem Support (32) derart in Wirkverbindung steht, dass der Support (32) durch eine Drehbewegung der Gewindespindel (33) in vertikaler Richtung verfahren wird.

8. Kaffeemaschine nach Anspruch 6 oder 7, **dadurch gekennzeichnet, dass** der Tragkörper (28) mit einer vertikal verlaufenden Führungsschiene (43) versehen ist, an welcher am Führungsorgan (49) gelagerte Führungsrollen (45, 46) geführt sind.

9. Kaffeemaschine nach Anspruch 8, **dadurch gekennzeichnet, dass** der Tragkörper (28) im wesentlichen einen rechteckigen Querschnitt besitz und auf der der Auffangschale (3a) zugewandten Vorderseite geöffnet ist, so dass zwei im wesentlichen L-förmig ausgebildete Seitenwände (29, 30) gebildet werden, wobei auf der Innenseite des Basisteils (29a, 30a) der jeweiligen Seitenwand (29, 30) je eine Zahnschiene (39, 40) angeordnet ist und wobei auf der Innenseite der Rückwand (35) des Tragkörpers (28) die vertikal verlaufende Führungsschiene (43) angeordnet ist, und wobei der Support (32) durch die in der Führungsschiene (43) geführten Führungsrollen (45, 46) derart geführt ist, dass die Zahnräder (41, 42) zwingend in die Zahnschienen (39, 40) eingreifen.

10. Kaffeemaschine nach Anspruch 8 oder 9, **dadurch gekennzeichnet, dass** der Support (32) mit zwei Führungsrollen (45, 46) versehen ist, wovon zumindest eine mittels einer Druckfeder (50) am Support (32) abgestützt ist.

11. Kaffeemaschine nach Anspruch einem der Ansprüche 6 bis 10, **dadurch gekennzeichnet, dass** die Kaffeemaschine mit einer elektronischen Steuereinheit versehen ist und auf der Vorderseite der Auffangschale (3a) zumindest ein berührungsempfindlicher Sensor (36, 37) angeordnet ist, welcher mit der elektronischen Steuereinheit derart verbunden ist, dass durch eine gezielte Berührung des Sensors (36, 37) die Auffangschale (3a) über einen mit der Steuereinheit verbundenen, elektromotorischen Antrieb (34) hinauf und hinunter fahrbar ist.

12. Kaffeemaschine nach Anspruch einem der Ansprüche 6 bis 11, **dadurch gekennzeichnet, dass** zumindest ein berührungsloser Sensor für eine automatische Tassenerkennung vorgesehen ist, welcher mit der elektronischen Kaffeemaschinensteuerung derart verbunden ist, dass die Auffangschale (3a) in Abhängigkeit der Tassenhöhe hinauf bzw. hinunter verfahren wird.

13. Kaffeemaschine nach Anspruch einem der Ansprüche 6 bis 12, **dadurch gekennzeichnet, dass** der Support (32) in Form eines Auslegers ausgebildet ist, der auf beiden Seiten mit je einem in eine Zahnschiene (39, 40) eingreifenden Zahnrad (41, 42) versehen ist, und dass die Führungsrollen (45, 46) zentral am Support (32) abgestützt sind.

14. Kaffeemaschine nach Anspruch 6, **dadurch gekennzeichnet, dass** ein federbelasteter Hebel zum Blockieren der Welle (44) an zumindest einem Zahnrad vorgesehen ist.

15. Kaffeemaschine nach Anspruch 14, **dadurch gekennzeichnet, dass** der Hebel manuell entgegen der Federkraft derart verschiebbar oder verschwenkbar ist, dass die Welle (44) in Drehrichtung freigegeben wird.

16. Kaffeemaschine nach Anspruch 14 oder 15, **dadurch gekennzeichnet, dass** die Welle (44) mit drei Zahnrädern versehen ist, wovon zwei endseitig und eines dazwischen an der Welle angeordnet sind, und wobei das dazwischen angeordnete Zahnrad mittels des Hebels blockierbar ist.

## Claims

1. Coffee machine having a housing (1), a beverage outlet (2) and a collection tray (3, 3a) which is arranged beneath the said beverage outlet and can be vertically adjusted by means of an adjusting apparatus (6, 27) and is provided with a cover plate for supporting at least one coffee cup, with the collection tray (3, 3a) being supported on a support (8, 32), **characterized in that** the adjusting apparatus (6) either
- comprises a vertically running rack rail (10), with in each case a guide rail (15) for guiding the support (8) or a carriage (11) which is connected to the support (8) being arranged on both sides of the rack rail (10), and with the support (8) being provided with at least one element (17) which engages on the rack rail (10) and is designed to fix the support (8) in the vertical direction, or **in that**
- the adjusting apparatus (27) is provided with two rack rails (39, 40) and a guide rail (43) which is arranged between the said rack rails, with a guide member (49), which is guided through the guide rail (43), and a shaft (44) being supported on the support (32), the said shaft being provided on both sides with in each case a toothed wheel (41, 42) which engages in a rack rail (39, 40).

2. Coffee machine according to Claim 1, **characterized in that** the adjusting apparatus (6) comprises a slide (9) which is spring-loaded in the direction of the rack rail (10) and can be displaced manually against the spring force and by means of which the support (8) can be fixed to the rack rail (10) in different positions in the vertical direction.

3. Coffee machine according to Claim 1 or 2, **characterized in that** the rack rail (10) is arranged centrally on the housing and in the centre between the two guide rails (15).

4. Coffee machine according to Claim 3, **characterized in that** the guide rails (15) are designed in the form of dovetail-like recesses, and the adjusting apparatus (6) comprises a carriage (11) which can be displaced along the guide rails (15) and is provided on both sides with guide cams (16) which correspond to and engage in the guide rails (15), and with the support (8) being fixed to the carriage (11).

5. Coffee machine according to one of the preceding claims, **characterized in that** the support (8) is of substantially L-shaped design and a latching element (18) is arranged on the upper side of the base part (8a), it being possible to releasably fix the collection tray (3) to the said latching element by way of a corresponding recess (19) or projection.

6. Coffee machine according to Claim 1, **characterized in that** the adjusting apparatus (27) comprises a supporting body (28) which extends in the vertical direction and on which the two rack rails (39, 40) are arranged, and **in that** the two toothed wheels (41, 42) are connected to one another in a force-fitting manner by means of the shaft (44), and with means (33, 34) being provided for blocking the shaft and/or for vertically moving the support (32).

7. Coffee machine according to Claim 6, **characterized in that** the coffee machine has a threaded spindle (33) which is driven by means of an electric motor (34) and is operatively connected to the support (32) in such a way that the support (32) is moved in the vertical direction by virtue of a rotary movement of the threaded spindle (33).

8. Coffee machine according to Claim 6 or 7, **characterized in that** the supporting body (28) is provided with a vertically running guide rail (43) on which guide rollers (45, 46), which are mounted on the guide member (49), are guided.

9. Coffee machine according to Claim 8, **characterized in that** the supporting body (28) has a substantially rectangular cross section and is open on the front side, which faces the collection tray (3a), so that two side walls (29, 30) which are of substantially L-shaped design are formed, with in each case a rack rail (39, 40) being arranged on the inside of the base part (29a, 30a) of the respective side wall (29, 30), and with the vertically running guide rail (43) being arranged on the inside of the rear wall (35) of the supporting body (28), and with the support (32) being guided by the guide rollers (45, 46), which are guided in the guide rail (43), in such a way that the toothed wheels (41, 43) necessarily engage in the rack rails (39, 40).

10. Coffee machine according to Claim 8 or 9, **characterized in that** the support (32) is provided with two guide rollers (45, 46), of which at least one is supported on the support (32) by means of a compression spring (50).

11. Coffee machine according to one of Claims 6 to 10, **characterized in that** the coffee machine is provided with an electronic control unit and at least one touch-sensitive sensor (36, 37) is arranged on the front side of the collection tray (3a), the said sensor being connected to the electronic control unit in such a way that the collection tray (3a) can be moved up and down by means of an electromotive drive (34), which is connected to the control unit, by the sensor (36, 37) being touched in a specific manner.

12. Coffee machine according to one of Claims 6 to 11, **characterized in that** at least one contactless sensor is provided for automatic cup identification, the said contactless sensor being connected to the electronic coffee machine control system in such a way that the collection tray (3a) is moved up or down as a function of the cup height.

13. Coffee machine according to one of Claims 6 to 12, **characterized in that** the support (32) is designed in the form of an extension arm which is provided on both sides with in each case a toothed wheel (41, 42) which engages in a rack rail (39, 40), and **in that** the guide rollers (45, 46) are supported centrally on the support (32).

14. Coffee machine according to Claim 6, **characterized in that** a spring-loaded lever for blocking the shaft (44) is provided on at least one toothed wheel.

15. Coffee machine according to Claim 14, **characterized in that** the lever can be displaced or pivoted manually against the spring force in such a way that the shaft (44) is released in the direction of rotation.

16. Coffee machine according to Claim 14 or 15, **characterized in that** the shaft (44) is provided with three toothed wheels, of which two are arranged at the ends of the shaft and one is arranged between them, and it being possible to block the toothed wheel which is arranged in-between by means of the lever.

## Revendications

1. Machine à café avec un boîtier (1), une sortie de boisson (2) et un récipient collecteur (3, 3a) disposé dessous qui est réglable en hauteur au moyen d'un dispositif de réglage (6, 27) et est pourvu d'une plaque de recouvrement pour l'appui d'au moins une tasse de café, le récipient collecteur (3, 3a) étant en appui contre un support (8, 32), **caractérisée en ce que** le dispositif de réglage (6)
- comporte une crémaillère (10) s'étendant verticalement, un rail de guidage (15) pour le guidage du support (8) ou d'un chariot (11) relié au support (8) étant disposé des deux côtés de la crémaillère (10) et le support (8) étant pourvu d'au moins un élément (17) engageant la crémaillère (10), qui est réalisé pour la fixation du support (8) dans le sens vertical, ou **en ce que**
- le dispositif de réglage (27) est pourvu de deux crémaillères (39, 40) et d'un rail de guidage (43) disposé au milieu, un organe de guidage (49) guidé par le rail de guidage (43) et un arbre (44) étant en appui contre le support (32), ledit arbre étant pourvu des deux côtés d'une roue dentée (41, 42) s'engageant dans une crémaillère (39, 40).

2. Machine à café selon la revendication 1, **caractérisée en ce que** le dispositif de réglage (6) comporte un coulisseau (9) sollicité par ressort en direction de la crémaillère (10), qui est mobile manuellement contre la force de ressort et au moyen duquel le support (8) peut être fixé dans différentes positions dans le sens vertical sur la crémaillère (10).

3. Machine à café selon la revendication 1 ou 2, **caractérisée en ce que** la crémaillère (10) est disposée centralement sur le boîtier et au milieu entre les deux rails de guidage (15).

4. Machine à café selon la revendication 3, **caractérisée en ce que** les rails de guidage (15) sont réalisés sous la forme d'évidements en queue d'aronde et le dispositif de réglage (6) comporte un chariot (11) mobile le long des rails de guidage (15), qui est pourvu des deux côtés de cames de guidage (16) correspondant aux rails de guidage (15) et s'engageant dans ceux-ci, et le support (8) étant fixé sur le chariot (11).

5. Machine à café selon l'une quelconque des revendications précédentes, **caractérisée en ce que** le support (8) est réalisé essentiellement en forme de L et un élément d'encliquetage (18) est disposé sur le dessus de la partie de base (8a), sur lequel peut être fixé de manière amovible le récipient collecteur (3) avec un évidement (19) correspondant ou une surélévation.

6. Machine à café selon la revendication 1, **caractérisée en ce que** le dispositif de réglage (27) comporte un corps porteur (28) s'étendant dans le sens vertical, sur lequel sont disposées les deux crémaillères (39, 40), et **en ce que** les deux roues dentées (41, 42) sont reliées à force l'une à l'autre par l'arbre (44) et des moyens (33, 34) pour le blocage de l'arbre et/ou pour le déplacement vertical du support (32) étant prévus.

7. Machine à café selon la revendication 6, **caractérisée en ce que** la machine à café présente une broche filetée (33) entraînée au moyen d'un moteur électrique (34), qui est en liaison fonctionnelle avec le support (32) de telle sorte que le support (32) soit déplacé par un mouvement de rotation de la broche filetée (33) dans le sens vertical.

8. Machine à café selon la revendication 6 ou 7, **caractérisée en ce que** le corps porteur (28) est pourvu d'un rail de guidage (43) s'étendant verticalement, sur lequel sont guidés des rouleaux de guidage (45, 46) logés sur l'organe de guidage (49).

9. Machine à café selon la revendication 8, **caractérisée en ce que** le corps porteur (28) possède essentiellement une section transversale rectangulaire et est ouvert sur le côté avant tourné vers le récipient collecteur (3a) de sorte que deux parois latérales (29, 30) réalisées essentiellement en forme de L soient formées, une crémaillère (39, 40) étant disposée sur le côté intérieur de la partie de base (29a, 30a) de la paroi latérale (29, 30) respective et le rail de guidage (43) s'étendant verticalement étant disposé sur le côté intérieur de la paroi arrière (35) du corps porteur (28), et le support (32) étant guidé par les rouleaux de guidage (45, 46) guidés dans le rail de guidage (43) de telle sorte que les roues dentées (41, 42) s'engagent impérativement dans les crémaillères(39, 40).

10. Machine à café selon la revendication 8 ou 9, **caractérisée en ce que** le support (32) est pourvu de deux rouleaux de guidage (45, 46), dont au moins un est en appui au moyen d'un ressort de compression (50) contre le support (32).

11. Machine à café selon l'une quelconque des revendications 6 à 10, **caractérisée en ce que** la machine à café est pourvue d'une unité de commande électronique et sur le côté avant du récipient collecteur (3a) est disposé au moins un capteur (36, 37) tactile qui est relié à l'unité de commande électronique de telle sorte que par un contact ciblé du capteur (36, 37), le récipient collecteur (3a) peut être déplacé vers le haut et le bas par un entraînement (34) à moteur électrique, relié à l'unité de commande.

12. Machine à café selon l'une quelconque des revendications 6 à 11, **caractérisée en ce qu'**au moins un capteur sans contact pour une détection de tasse automatique est prévu, lequel est relié à la commande de machine à café électronique de telle sorte que le récipient collecteur (3a) soit déplacé vers le haut ou le bas en fonction de la hauteur de la tasse.

13. Machine à café selon l'une quelconque des revendications 6 à 12, **caractérisée en ce que** le support (32) est réalisé sous la forme d'un bras qui est pourvu des deux côtés d'une roue dentée (41, 42) s'engageant dans une crémaillère (39, 40), et **en ce que** les rouleaux de guidage (45, 46) sont en appui centralement contre le support (32).

14. Machine à café selon la revendication 6, **caractérisée en ce qu'**un levier sollicité par ressort pour le blocage de l'arbre (44) sur au moins une roue dentée est prévu.

15. Machine à café selon la revendication 14, **caractérisée en ce que** le levier est mobile ou peut pivoter manuellement contre la force de ressort de telle sorte que l'arbre (44) soit libéré dans le sens de rotation.

16. Machine à café selon la revendication 14 ou 15, **caractérisée en ce que** l'arbre (44) est pourvu de trois roues dentées, dont deux sont disposées d'un côté et une au milieu sur l'arbre, et la roue dentée disposée au milieu pouvant être bloquée au moyen du levier.
